# EUROPÄISCHE PATENTANMELDUNG

(11) **EP 3 871 574 A1**
(43) Veröffentlichungstag der Anmeldung: **01.09.2021**
(21) Anmeldenummer: 20159942.0
(22) Anmeldetag: 28.02.2020
(51) Int. Cl.: A47J 36/32, A47J 43/07

(54) **KÜCHENMASCHINE UND VERFAHREN ZUM BETREIBEN EINER KÜCHENMASCHINE**

(71) Anmelder: Vorwerk & Co. Interholding GmbH, 42275 Wuppertal (DE)
(72) Erfinder: REITZ, Paul, 51399 Burscheid (DE)
(74) Vertreter: Von Rohr Patentanwälte Partnerschaft mbB

(57) **Zusammenfassung**

Es werden ein Verfahren zum Betreiben einer Küchenmaschine und eine Küchenmaschine zur Zubereitung eines Lebensmittels vorgeschlagen, wobei durch das Erhitzen des Lebensmittels entstehende Schwingungen bzw. Schwingungsänderungen gemessen werden, um den Heizzustand des Lebensmittels zu identifizieren und/oder zu überwachen.

## Beschreibung

Die vorliegende Erfindung betrifft ein Verfahren zum Betreiben einer Küchenmaschine gemäß dem Oberbegriff des Anspruchs 1 und eine Küchenmaschine zur Zubereitung eines Lebensmittels gemäß dem Oberbegriff des Anspruchs 15.

Elektrisch betriebene Küchenmaschinen werden zur zumindest teilweise automatischen Zubereitung von Speisen/Gerichten bzw. zur Bearbeitung, insbesondere zum Erhitzen, Zerkleinern und/oder Mischen, von Lebensmitteln/Zutaten verwendet.

Es ist bei derartigen Küchenmaschinen bekannt, zur Zubereitung von Speisen bzw. Gerichten ein Lebensmittel in einem Gefäß mittels eines elektrischen Heizsystems zu erhitzen, wobei eine (Ziel-)Temperatur des Heizsystems als Führungsgröße vorgegeben und eine Temperatur als Regelgröße gemessen wird, um den Heizvorgang zu überwachen bzw. das Heizsystem zu regeln.

Der vorliegenden Erfindung liegt die Aufgabe zugrunde, ein verbessertes Verfahren zum Betreiben einer Küchenmaschine und eine verbesserte Küchenmaschine zur Zubereitung eines Lebensmittels anzugeben, das bzw. die eine sichere, zuverlässige, einfache und/oder reproduzierbare Zubereitung eines Lebensmittels und/oder eine präzise, einfache und/oder zuverlässige Identifikation und/oder Überwachung eines Zubereitungs- bzw. Heizzustands des Lebensmittels bei der Zubereitung ermöglicht oder unterstützt.

Die der Erfindung zugrunde liegende Aufgabe wird durch ein Verfahren gemäß Anspruch 1, eine Verwendung gemäß Anspruch 14 oder eine Küchenmaschine gemäß Anspruch 15 gelöst. Vorteilhafte Weiterbildungen sind Gegenstand der Unteransprüche.

Die vorschlagsgemäße Küchenmaschine ist eine elektrisch betriebene, insbesondere multifunktionale, Vorrichtung zur - insbesondere zumindest teilweise automatischen - Zubereitung von Speisen/Gerichten bzw. zur Bearbeitung, insbesondere zum Erhitzen, Zerkleinern und/oder Mischen, von Lebensmitteln/Zutaten.

Zu diesem Zweck weist die vorschlagsgemäße Küchenmaschine ein optionales Gefäß zur Aufnahme des Lebensmittels, ein elektrisches Heizsystem zum Erhitzen des Lebensmittels, einen Rührer zum Umrühren/Mischen und/oder Zerkleinern des Lebensmittels und/oder eine Messeinrichtung, wie eine - insbesondere integrierte und/oder elektronische - Waage zum Bestimmen des Gewichts des Lebensmittels, auf.

Die Küchenmaschine kann jedoch auch eine sonstige elektrisch betriebene Maschine zur Zubereitung bzw. Bearbeitung, insbesondere zum Erhitzen, eines Lebensmittels sein, wie ein Herd, ein Backofen, eine Mikrowelle, ein Grill, ein Toaster und/oder ein Wasserkocher.

Bei dem vorschlagsgemäßen Verfahren zum Betreiben der Küchenmaschine ist vorgesehen, die durch das bzw. beim Erhitzen des Lebensmittels entstehenden insbesondere mechanischen, periodischen und/oder nichtperiodischen Schwingungen bzw. Schwingungsänderungen - vorzugsweise im Gefäß der Küchenmaschine und/oder mittels der Messeinrichtung der Küchenmaschine und/oder automatisch bzw. messtechnisch - zu messen, um einen insbesondere rezeptgemäßen/vorgesehenen und/oder kritischen/ungewollten Zubereitungs-, Koch- bzw. Heizzustand des Lebensmittels bei der Zubereitung zu identifizieren/erkennen und/oder zu überwachen. Insbesondere wird der Zubereitungs-, Koch- bzw. Heizzustand des Lebensmittels - vorzugsweise ausschließlich und/oder ohne zusätzliche Messinstrumente - mittels der gemessenen Schwingungen bzw. Schwingungsänderungen identifiziert/erkannt und/oder überwacht.

Ein Zubereitungs-, Koch- bzw. Heizzustand, im Folgenden Heizzustand genannt, im Sinne der vorliegenden Erfindung ist der Zustand des Lebensmittels bei der Zubereitung bzw. beim Erhitzen des Lebensmittels. Vorzugsweise ändert sich der Heizzustand des Lebensmittels während der Zubereitung bzw. beim Erhitzen.

Insbesondere kann es sich bei dem Heizzustand um einen für die Zubereitung des Lebensmittels optimalen, notwendigen, in einem Rezept vorgesehenen und/oder zu erreichenden Zustand des Lebensmittels während der Zubereitung bzw. beim Erhitzen handeln. Bei dem Heizzustand kann es sich aber auch um einen kritischen bzw. ungewollten Zustand des Lebensmittels handeln, der - insbesondere ohne entsprechende Gegenmaßnahmen - das Zubereitungsergebnis beeinträchtigen würde.

Beispielsweise kann der Heizzustand eine für die Zubereitung des Lebensmittels optimale, notwendige und/oder zu erreichende Zubereitungs- bzw. Zieltemperatur, wie eine Siede-, Brat-, Grill-, Dünst- und/oder Frittiertemperatur, sein.

Bei der Zubereitung bzw. beim Erhitzen eines Lebensmittels entsteht ein - insbesondere für die jeweilige Zubereitungsart charakteristisches - Geräusch, wie ein Siede-, Brat-, Grill- und/oder Frittiergeräusch.

Während der Zubereitung des Lebensmittels verändert sich das Geräusch, insbesondere die Intensität bzw. Lautstärke und/oder die Tonalität bzw. das Frequenzspektrum des Geräuschs.

Die Schwingungen bzw. die Schwingungsänderungen bzw. die zeitliche Veränderung des Geräuschs können bzw. kann deshalb dazu verwendet werden, den Heizzustand des Lebensmittels - insbesondere automatisch bzw. messtechnisch - zu identifizieren und/oder zu überwachen.

Beispielsweise können die Schwingungen bzw. Schwingungsänderungen beim Erhitzen von Wasser gemessen werden, um einen Siedezustand und/oder einen Siedepunkt des Lebensmittels - insbesondere automatisch bzw. messtechnisch - zu identifizieren und/oder zu überwachen.

Vorzugsweise wird die Zubereitung des Lebensmittels bzw. der Betrieb der Küchenmaschine in Abhängigkeit vom identifizierten Heizzustand und/oder mittels der gemessenen Schwingungen bzw. Schwingungsänderungen automatisch angepasst bzw. geregelt. Insbesondere kann die Heizleistung der Küchenmaschine mittels der gemessenen Schwingungen bzw. Schwingungsänderungen (als Regelgröße) bzw. bei Identifikation des Heizzustands automatisch angepasst und/oder ein Rührvorgang und/oder ein Heizvorgang automatisch durchgeführt, gestartet, beendet und/oder angepasst werden.

Beim Sieden bzw. bei Erreichen des Siedepunkts des Lebensmittels ist es beispielsweise möglich, mittels der gemessenen Schwingungen bzw. Schwingungsänderungen die Küchenmaschine bzw. das Heizsystem derart zu regeln, dass das Lebensmittel oberhalb des Siedepunkts (Kochen) oder unterhalb des Siedepunkts (Simmern) des Lebensmittels zubereitet wird.

Es ist jedoch auch möglich, andere Heizzustände mittels der Schwingungen bzw. Schwingungsänderungen bzw. Geräuschentwicklung zu identifizieren und/oder zu überwachen, wie ein Braten, Grillen, Schmoren, Dünsten und/oder Frittieren des Lebensmittels.

Durch das vorschlagsgemäße Verfahren ist es möglich, den Heizzustand des Lebensmittels ausschließlich mittels der Schwingungen bzw. Schwingungsänderungen und/oder unabhängig vom Luftdruck und/oder der Zusammensetzung des Lebensmittels zu identifizieren und/oder zu überwachen.

Auf diese Weise wird eine besonders sichere, zuverlässige, einfache und/oder reproduzierbare Zubereitung des Lebensmittels und/oder eine präzise, einfache und/oder zuverlässige Identifikation und/oder Überwachung des Heizzustands des Lebensmittels bei der Zubereitung ermöglicht oder unterstützt.

Ein Lebensmittel im Sinne der vorliegenden Erfindung ist vorzugsweise ein Nahrungsmittel und/oder ein Genussmittel für den Verzehr. Lebensmittel können beispielsweise Produkte pflanzlichen Ursprungs, wie Gemüse, Obst und/oder ein Getreidetrockenprodukt, und/oder Produkte tierischen Ursprungs, wie Eier, Fleischwaren und/oder Milchprodukte, sein.

Ein Lebensmittel im Sinne der vorliegenden Erfindung kann ein Anfangs-, Zwischen- und/oder Endprodukt für den Verzehr bzw. für eine Speise und/oder ein Gericht sein. Insbesondere kann ein Lebensmittel im Sinne der vorliegenden Erfindung eine Zutat für eine Speise und/oder ein Gericht bilden und/oder selbst durch mehrere Lebensmittel gebildet sein.

Eine Schwingung im Sinne der vorliegenden Erfindung ist insbesondere eine wiederholte zeitliche Schwankung der (räumlichen) Position einer Masse, eines Körpers und/oder eines Stoffes, wie des erhitzten Lebensmittels in der Küchenmaschine und/oder des Gefäßes der Küchenmaschine. Eine Schwingung kann harmonisch, periodisch, nichtperiodisch, ungedämpft, gedämpft, linear und/oder nichtlinear sein.

Vorzugsweise weist eine harmonische, periodische, ungedämpfte und/oder lineare Schwingung eine konstante bzw. zeitlich stationäre Amplitude, Periodendauer und/oder Frequenz auf. Vorzugsweise weist eine nichtperiodische, gedämpfte und/oder nichtlineare Schwingung eine sich verändernde bzw. zeitlich instationäre Amplitude, Periodendauer und/oder Frequenz auf.

Eine Schwingung kann sich räumlich ausbreiten und/oder eine Welle, insbesondere eine Schallwelle, und/oder eine Vibration sein. Vorzugsweise ist eine Schwingung im Sinne der vorliegenden Erfindung akustisch und/oder haptisch wahrnehmbar.

Schwingungen können sich überlagern. Insbesondere können sich mehrere (unterschiedliche) Schwingungen, insbesondere Schwingungen mit unterschiedlicher Amplitude und/oder Frequenz, zu einem - zeitlich stationären, instationären, tonalen, akustisch und/oder haptisch wahrnehmbaren oder nicht wahrnehmbaren - Rauschen und/oder Geräusch, wie einem Siedegeräusch, überlagern.

Die vorschlagsgemäße Küchenmaschine umfasst vorzugsweise eine Basisstation für das Gefäß, wobei die Basisstation und das Gefäß elektrisch und/oder mechanisch verbunden oder verbindbar sind, insbesondere um ein Erhitzen und/oder Mischen/Umrühren des Lebensmittels in dem Gefäß zu ermöglichen.

Die Waage der Küchenmaschine ist vorzugsweise in die Basisstation, insbesondere eine Aufnahme für das Gefäß der Basisstation, integriert, vorzugsweise derart, dass das Gewicht des Gefäßes bzw. eine Änderung des Gewichts des Gefäßes gemessen bzw. bestimmt werden kann.

Auf diese Weise kann mittels der Waage das Gewicht des Lebensmittels - direkt oder indirekt - gemessen bzw. bestimmt werden.

Die Küchenmaschine weist vorzugsweise mindestens einen insbesondere piezoelektrischen Drucksensor auf, insbesondere wobei der Drucksensor die Waage bildet und/oder zur Bestimmung des Gewichts des Lebensmittels verwendet wird.

Piezoelektrische Drucksensoren weisen im Vergleich zu anderen Sensoren eine besonders hohe Empfindlichkeit auf und können auch zur Messung hochfrequenter Schwingungen bzw. Druckschwankungen, insbesondere mit Frequenzen von mehr als 10 kHz, 20 kHz oder 50 kHz, eingesetzt werden.

Gemäß einer besonders bevorzugten Verfahrensvariante werden die Schwingungen bzw. Schwingungsänderungen mittels der (integrierten) Waage bzw. des Drucksensors der Küchenmaschine gemessen. Auf diese Weise kann auf zusätzliche Sensorik verzichtet werden bzw. die Funktionalität der Küchenmaschine ohne konstruktive Veränderungen der Küchenmaschine erweitert werden.

Gemäß einem weiteren, auch unabhängig realisierbaren Aspekt der vorliegenden Erfindung wird die Waage der Küchenmaschine zur Identifikation des Heizzustands des Lebensmittels verwendet, wobei mittels der Waage die durch das Erhitzen des Lebensmittels in der Küchenmaschine entstehenden Schwingungen bzw. Schwingungsänderungen - insbesondere automatisch bzw. messtechnisch - gemessen werden, um den Heizzustand des Lebensmittels zu identifizieren und/oder zu überwachen. Auf diese Weise werden entsprechende Vorteile realisiert.

Die vorgenannten Aspekte, Merkmale und Verfahrensschritte bzw. -varianten der Erfindung sowie die sich aus den Ansprüchen und der nachfolgenden Beschreibung ergebenden Aspekte, Merkmale und Verfahrensschritte bzw. -varianten der vorliegenden Erfindung können grundsätzlich unabhängig voneinander, aber auch in beliebiger Kombination bzw. Reihenfolge realisiert werden.

Weitere Aspekte, Vorteile, Merkmale und Eigenschaften der vorliegenden Erfindung ergeben sich aus den Ansprüchen und der nachfolgenden Beschreibung einer bevorzugten Ausführungsform anhand der Figuren. Es zeigt:
- Fig. 1: eine schematische Seitenansicht einer vorschlagsgemäßen Küchenmaschine;
- Fig. 2: ein schematisches Diagramm zur Veranschaulichung der Temperaturverteilung über die Höhe der Küchenmaschine zu drei unterschiedlichen Zeitpunkten;
- Fig. 3: ein schematisches Diagramm mit dem zeitlichen Verlauf der durch das Erhitzen des Lebensmittels entstehenden Schwingungen bzw. eines durch das Erhitzen des Lebensmittels entstehenden Geräuschs; und
- Fig. 4: ein schematisches Diagramm zur Veranschaulichung der spektralen Veränderung der Schwingungen bzw. des Geräuschs.

In den teilweise nicht maßstabsgerechten, nur schematischen Figuren werden für gleiche, gleichartige oder ähnliche Bauteile und Komponenten dieselben Bezugszeichen verwendet, wobei entsprechende oder vergleichbare Eigenschaften und Vorteile erreicht werden, auch wenn von einer wiederholten Beschreibung abgesehen wird.

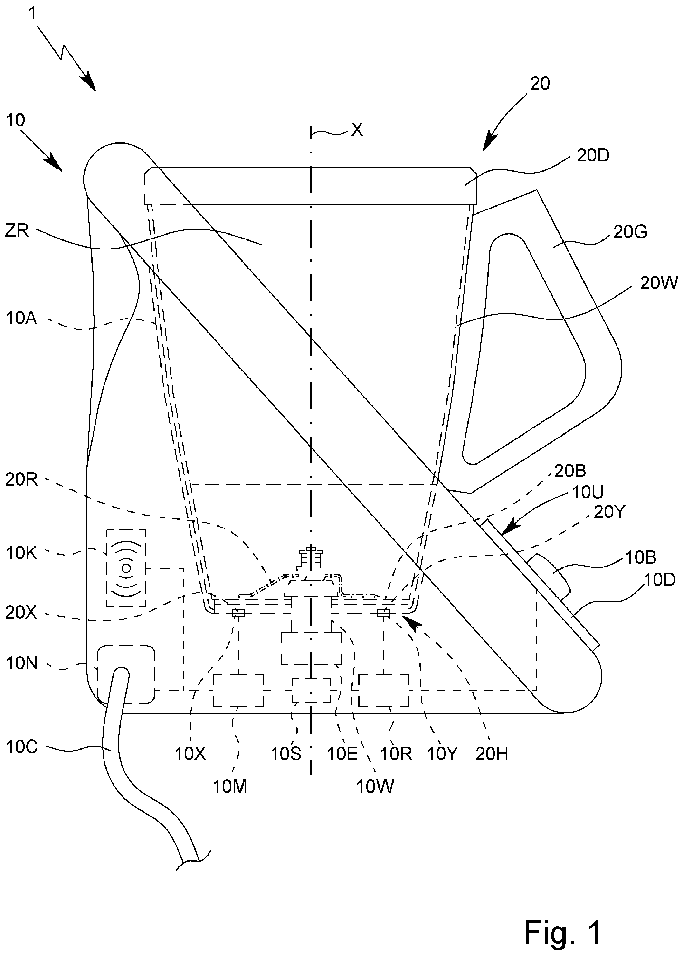

Fig. 1 zeigt schematisch eine vorschlagsgemäße Küchenmaschine 1 zur Zubereitung bzw. Bearbeitung von Lebensmitteln, insbesondere zur Zubereitung von Speisen/Gerichten und/oder Bestandteilen davon. Bei der Küchenmaschine 1 handelt es sich vorzugsweise um eine elektrisch betriebene Multifunktions-Küchenmaschine, die zum Zerkleinern, Rühren bzw. Mischen und/oder Erhitzen bzw. Kochen von Lebensmitteln ausgebildet ist.

Die Küchenmaschine 1 weist vorzugsweise eine Basisstation 10 und/oder ein Gefäß 20 zur Aufnahme von (nicht dargestellten) Lebensmitteln auf.

Die Basisstation 10 und das Gefäß 20 sind vorzugsweise elektrisch und/oder mechanisch miteinander verbunden oder verbindbar, insbesondere um ein Erhitzen und/oder Mischen/Umrühren des Lebensmittels in dem Gefäß 20 zu ermöglichen. Es sind darüber hinaus auch Lösungen möglich, bei denen die Basisstation 10 und das Gefäß 20 zusätzlich fluidisch miteinander verbunden oder verbindbar sind, beispielsweise um in der Basisstation 10 erzeugten Wasserdampf in das Gefäß 20 zu leiten.

Fig. 1 zeigt die Küchenmaschine 1 im üblichen Gebrauchszustand bzw. in der Anschlussposition, in der das Gefäß 20 elektrisch und/oder mechanisch an die Basisstation 10 angeschlossen ist.

Die Basisstation 10 weist vorzugsweise eine Aufnahme 10A auf, um das Gefäß 20 zumindest teilweise und/oder bodenseitig aufzunehmen. Besonders bevorzugt ist das Gefäß 20 zumindest teilweise in die Basisstation 10 einsetzbar oder einhängbar, um das Gefäß 20 mechanisch und/oder elektrisch mit der Basisstation 10 zu verbinden.

Das Gefäß 20 weist eine Wandung 20W, einen Boden 20B und einen Zubereitungsraum ZR auf, wobei die Wandung 20W den Zubereitungsraum ZR radial bzw. seitlich und der Boden 20B den Zubereitungsraum ZR axial bzw. von unten begrenzt.

Das Gefäß 20 weist vorzugsweise einen Deckel 20D auf, um den Zubereitungsraum ZR axial bzw. von oben zu begrenzen und/oder insbesondere drucksicher zu verschließen.

Optional ist das Gefäß 20 mit einem Griff 20G ausgestattet, um die Handhabung des Gefäßes 20 zu erleichtern.

Bei der dargestellten Ausführungsform ist das Gefäß 20 zumindest im Wesentlichen rund bzw. zylinderförmig ausgebildet. Es sind jedoch grundsätzlich auch Ausführungsformen möglich, bei denen das Gefäß 20 eckig, insbesondere rechteckig, ausgebildet ist.

Das Gefäß 20 weist eine Mittelachse X auf, wobei die Mittelachse X mittig durch das Gefäß 20 bzw. den Zubereitungsraum ZR verläuft, wie in Fig. 1 angedeutet.

Vorzugsweise ist die Mittelachse X eine Längs- oder Symmetrieachse des vorzugsweise länglichen, zylindrischen und/oder zumindest im Wesentlichen rotationssymmetrischen Gefäßes 20.

Optional ist das Gefäß 20 mit einem Rührer 20R ausgestattet, insbesondere um Lebensmittel im Zubereitungsraum ZR zu zerkleinern und/oder zu (durch-)mischen. Der Rührer 20R ist vorzugsweise am Boden 20B des Gefäßes 20 angeordnet bzw. drehbar gelagert. Der Rührer 20R weist vorzugsweise mehrere, insbesondere austauschbare, Rührblätter auf.

Vorzugsweise weisen die Rührblätter Schneiden auf oder sind als Schneiden ausgebildet, um Lebensmittel zu zerkleinern.

Vorzugsweise entspricht die Mittelachse X des Gefäßes 20 der Drehachse des Rührers 20R.

Vorzugsweise ist das Gefäß 20 mechanisch mit der Basisstation 10 verbunden oder verbindbar, um den Rührer 20R mittels der Basisstation 10 anzutreiben.

Zum Antrieb des Rührers 20R weist die Küchenmaschine 1, insbesondere die Basisstation 10, einen Elektromotor 10E auf, der über eine Welle 10W mit dem Rührer 20R verbunden oder verbindbar ist und/oder - in der Anschlussposition des Gefäßes 20 - von unten formschlüssig in den Boden 20B eingreift.

Wie eingangs bereits erläutert, ist die Küchenmaschine 1 dazu ausgebildet, Lebensmittel bzw. ein Medium im Gefäß 20 bzw. im Zubereitungsraum ZR zu erhitzen.

Zu diesem Zweck ist das Gefäß 20 bzw. der Zubereitungsraum ZR elektrisch beheizbar bzw. weist die Küchenmaschine 1 ein elektrisches Heizsystem 20H auf.

Das Heizsystem 20H ist zum (unmittelbaren) Erhitzen des Gefäßes 20, insbesondere des Bodens 20B und/oder des Zubereitungsraums ZR, ausgebildet. Besonders bevorzugt ist das Heizsystem 20H als Dickschichtheizung ausgebildet.

Bei der dargestellten Ausführungsform ist das Heizsystem 20H in das Gefäß 20, insbesondere den Boden 20B, integriert bzw. bildet das Heizsystem 20H oder ein Teil des Heizsystems 20H den Boden 20B des Gefäßes 20 oder einen Teil davon. Es sind jedoch auch konstruktive Lösungen möglich, bei denen die Basisstation 10 das Heizsystem 20H aufweist oder bildet.

Um eine Stromversorgung der Basisstation 10 und/oder des Gefäßes 20, insbesondere des Heizsystems 20H und/oder des Elektromotors 10E, zu ermöglichen, ist die Küchenmaschine 1, insbesondere die Basisstation 10, mit einem Netzteil 10N - vorzugsweise mit einer entsprechenden Ladeelektronik - und/oder einem Netzkabel 10C zum Anschluss an ein Stromnetz ausgestattet.

Vorzugsweise weist die Basisstation 10 einen oder mehrere elektrische Anschlüsse 10X bzw. 10Y für das Gefäß 20 auf, um das Gefäß 20 - in der Anschlussposition - elektrisch mit der Basisstation 10 bzw. dem Netzteil 10N zu verbinden bzw. mit elektrischer Energie zu versorgen.

Die elektrischen Anschlüsse 10X bzw. 10Y ist bzw. sind vorzugsweise in die Aufnahme 10A der Basisstation 10 integriert, insbesondere derart, dass durch Einsetzen des Gefäßes 20 in die Basisstation 10 automatisch eine elektrische Verbindung zwischen dem Gefäß 20 und der Basisstation 10 hergestellt wird.

Das Gefäß 20 weist vorzugsweise einen oder mehrere zu dem elektrischen Anschluss 10X bzw. 10Y korrespondierende elektrische Anschlüsse 20X bzw. 20Y auf, vorzugsweise wobei der elektrische Anschluss 20X bzw. 20Y auf einer Unterseite des Gefäßes 20 bzw. des Boden 20B angeordnet ist, wie in Fig. 1 angedeutet.

Die elektrischen Anschlüsse 10X bzw. 10Y und 20X bzw. 20Y sind vorzugsweise durch einen oder mehrere elektrische Kontakte oder - insbesondere für eine drahtlose Energieübertragung - durch eine oder mehrere Spulen gebildet.

Die Küchenmaschine 1, insbesondere die Basisstation 10, weist vorzugsweise eine Benutzerschnittstelle 10U, eine Datenverarbeitungseinrichtung 10R, eine Steuereinrichtung 10S, eine Kommunikationseinrichtung 10K und/oder eine Messeinrichtung 10M auf, vorzugsweise wobei die Benutzerschnittstelle 10U, die Datenverarbeitungseinrichtung 10R, die Steuereinrichtung 10S, die Kommunikationseinrichtung 10K, die Messeinrichtung 10M, das Netzteil 10N, das Heizsystem 20H, der Elektromotor 10E und/oder die Anschlüsse 10X, 10Y elektrisch miteinander verbunden sind, wie in Fig. 1 durch Strichlinien angedeutet.

Die Benutzerschnittstelle 10U ist durch mindestens eine Anzeigeeinrichtung 10D, wie einen Bildschirm, und/oder mindestens eine Eingabeeinrichtung 10B, insbesondere ein Bedienelement, wie ein Drehknopf, gebildet. Über die Benutzerschnittstelle 10U kann ein Nutzer der Küchenmaschine 1 mit der Küchenmaschine 1 interagieren bzw. ein bzw. eine oder mehrere Informationen/Parameter, beispielsweise betreffend den Betrieb der Küchenmaschine 1, das zuzubereitende Lebensmittel und/oder das zu verwendende Rezept, der Küchenmaschine 1 entnehmen und/oder hinzufügen.

Die Datenverarbeitungseinrichtung 10R ist vorzugsweise eine Einrichtung zur Auswertung, Speicherung und/oder Verarbeitung ein oder mehrerer Signale, Daten, Messwerte, Referenzwerte, Informationen, Parameter o.dgl. Insbesondere weist die Datenverarbeitungseinrichtung 10R eine Recheneinheit, wie einen Prozessor, und/oder einen (Daten-)Speicher, beispielsweise in Form einer SSD, auf.

Die Steuereinrichtung 10S ist vorzugsweise dazu ausgebildet, den Elektromotor 10E bzw. den Rührer 20R und/oder das Heizsystem 20H insbesondere entsprechend den Vorgaben eines Rezepts zu steuern, insbesondere zu aktivieren bzw. zu deaktivieren und/oder die Leistung des Elektromotors 10E und/oder des Heizsystems 20H anzupassen, vorzugsweise zumindest teilweise automatisch.

Durch die Kommunikationseinrichtung 10K kann die Küchenmaschine 1 mit einem oder mehreren (externen) Geräten, insbesondere einem Mobilgerät, wie einem Mobiltelefon, und/oder Einrichtungen, insbesondere einer Zentraleinrichtung, wie einem Server, (datentechnisch) gekoppelt werden.

Insbesondere ermöglicht die Kommunikationseinrichtung 10K eine drahtgebundene oder drahtlose Datenverbindung zwischen der Küchenmaschine 1 und einem oder mehreren (externen) Geräten bzw. einer oder mehreren Einrichtungen, um ein Signal und/oder eine Information, insbesondere betreffend den Betrieb der Küchenmaschine 1, die zuzubereitenden Lebensmittel und/oder das zu verwendende Rezept, zu ermitteln bzw. zwischen der Küchenmaschine 1 und dem bzw. den Geräten und/oder der bzw. den Einrichtung(en) auszutauschen, wobei der Datenaustausch bzw. die Signalübertragung dabei direkt oder indirekt erfolgen kann.

Ein Signal im Sinne der vorliegenden Erfindung ist vorzugsweise ein Mittel zur Informationsübertragung, eine (modulierte) Welle, eine Bitsequenz, ein Paket im informationstechnischen Sinne oder dergleichen. Insbesondere sind einem Signal eine oder mehrere Informationen zugeordnet und/oder in dem Signal enthalten, die mittels des Signals übermittelbar ist bzw. sind.

Die Kommunikationseinrichtung 10K weist vorzugsweise einen Receiver zum Empfangen eines Signals, einen Transmitter zum Senden eines Signals und/oder eine Schnittstelle, insbesondere eine Funkschnittstelle, eine WPAN-Schnittstelle, eine Nahfeldkommunikationsschnittstelle, eine NFC-Schnittstelle, eine WLAN-Schnittstelle oder eine sonstige, besonders bevorzugte drahtlose, Schnittstelle auf.

Mittels der Messeinrichtung 10M können eine oder mehrere Messgrößen, wie eine Temperatur, ein Gewicht, eine elektrische Spannung, eine elektrische Stromstärke, ein elektrischer Widerstand, eine Drehzahl, ein Druck, eine Luftfeuchtigkeit und/oder eine Neigung der Küchenmaschine 1, insbesondere der Basisstation 10 und/oder des Gefäßes 20, besonders bevorzugt des Elektromotors 10E und/oder des Heizsystems 20H, (direkt oder indirekt) bestimmt bzw. gemessen werden. Zu diesem Zweck weist die Messeinrichtung 10M einen oder mehrere Sensoren bzw. Messgeräte auf, wie einen Temperatursensor, eine Waage, ein Spannungsmessgerät, ein Strommessgerät, ein Drehzahlmessgerät, einen Drucksensor, einen Feuchtigkeitssensor und/oder einen Neigungssensor.

Vorzugsweise weist die Küchenmaschine 1, insbesondere die Basisstation 10 bzw. die Messeinrichtung 10M, mindestens einen - insbesondere piezoelektrischen - Drucksensor auf, wobei der Drucksensor eine Waage der Küchenmaschine 1 bilden kann bzw. das Gewicht des Gefäßes 20 bzw. des Lebensmittels in dem Gefäß 20 mittels des Drucksensors bestimmbar ist.

Bei dem vorschlagsgemäßen Verfahren ist vorgesehen, insbesondere mittels der Messeinrichtung 10M bzw. des Drucksensors, die durch das Erhitzen des Lebensmittels entstehenden (mechanischen) Schwingungen bzw. Schwingungsänderungen zu messen bzw. messtechnisch zu erfassen und anhand der gemessenen Schwingungen bzw. Schwingungsänderungen den Heizzustand des Lebensmittels zu identifizieren/bestimmen und/oder zu überwachen, insbesondere um den Betrieb der Küchenmaschine 1, besonders bevorzugt die Heizleistung der Küchenmaschine 1 bzw. des Heizsystems 20H, in Abhängigkeit von dem identifizierten Heizzustand und/oder den gemessenen Schwingungen bzw. Schwingungsänderungen automatisch zu regeln bzw. anzupassen.

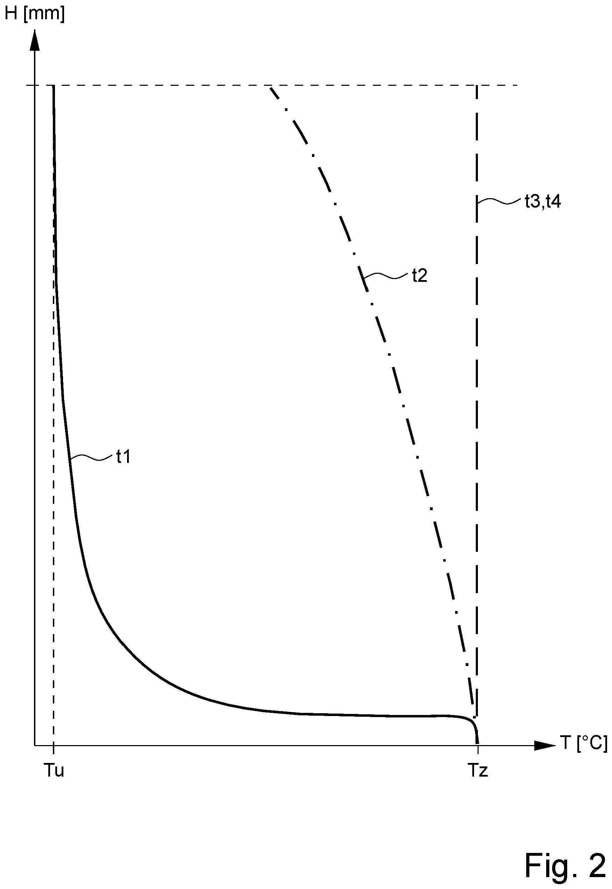

Im Folgenden wird anhand der in den Fig. 2 bis 4 dargestellten Diagramme das vorschlagsgemäße Verfahren erläutert, bei dem Wasser als Lebensmittel bzw. als Bestandteil des Lebensmittels bis zum Siedepunkt erhitzt wird. Das vorschlagsgemäße Verfahren kann jedoch grundsätzlich auch für andere Lebensmittel und/oder Zubereitungsarten eingesetzt werden.

Fig. 2 zeigt den Temperaturverlauf des Lebensmittels über die (Füll-)Höhe H des Gefäßes 20 zu drei unterschiedlichen Zeitpunkten t1 bis t3 beim Erhitzen des Lebensmittels von einer Anfangstemperatur Tu auf eine Ziel- bzw. Zubereitungstemperatur Tz.

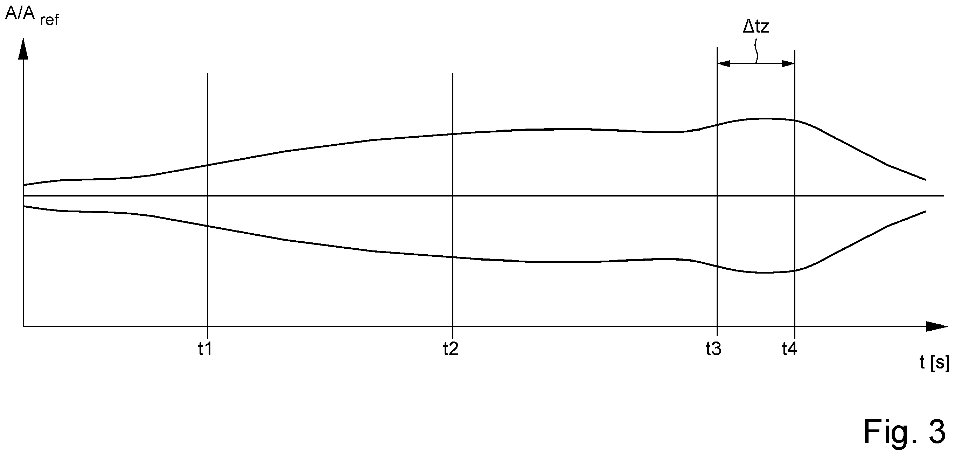

Fig. 3 zeigt den zeitlichen Verlauf der Einhüllenden bzw. Hüllkurve der durch das Erhitzen des Lebensmittels entstehenden Schwingungen bzw. eines durch das Erhitzen des Lebensmittels entstehenden (Siede-)Geräuschs.

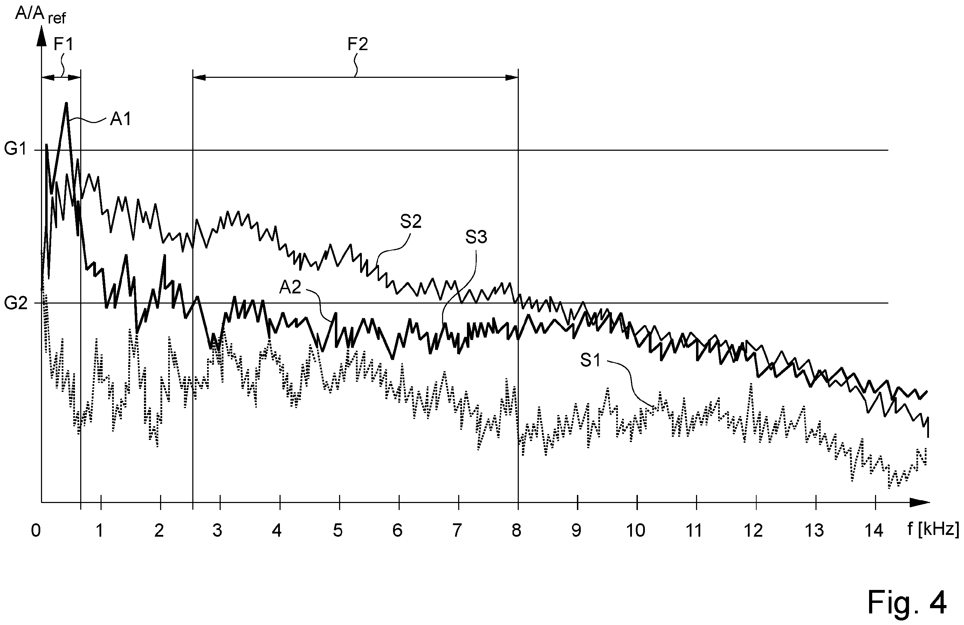

Fig. 4 zeigt die spektrale Veränderung der Schwingungen bzw. des Geräuschs in Abhängigkeit von der Frequenz f der Schwingungen bzw. des Geräuschs als Amplitudenspektren zu den drei verschiedenen Zeitpunkten t1 bis t3.

Bei dem Verfahren wird das Lebensmittel - insbesondere in einem (ununterbrochenen) Heizvorgang und/oder mittels des Heizsystems 20H - von der Anfangstemperatur Tu auf die Ziel- bzw. Zubereitungstemperatur Tz, im Folgenden Zieltemperatur Tz genannt, erhitzt.

Die Anfangstemperatur Tu ist vorzugsweise die Temperatur des Lebensmittels unmittelbar vor bzw. zu Beginn des Heizvorgangs bzw. vor Erhitzen des Lebensmittels in dem Gefäß 20. Die Anfangstemperatur Tu kann der Umgebungstemperatur entsprechen und beispielsweise zumindest im Wesentlichen 20 °C betragen.

Die Zieltemperatur Tz ist vorzugsweise die Temperatur, die für die (rezeptgemäße/vorgesehene) Zubereitung des Lebensmittels notwendig ist. Beispielsweise kann die Zieltemperatur Tz der Siedetemperatur des Lebensmittels entsprechen und/oder zumindest im Wesentlichen 100 °C betragen.

Bei der in den Fig. 2 bis 4 dargestellten Verfahrensvariante wird Wasser als Lebensmittel bis zum Sieden bzw. bis zur Siedetemperatur als Zieltemperatur Tz erhitzt. Vorzugsweise wird das Lebensmittel anschließend bzw. zur Zubereitung für eine (rezeptgemäße/vordefinierte) Zubereitungszeit Δtz der Zieltemperatur Tz ausgesetzt.

Unmittelbar nach Einschalten des Heizsystems 20H bzw. unmittelbar nach Beginn des Heizvorgangs bzw. zum Zeitpunkt t1 wird das Gefäß 20 bodenseitig bzw. der Boden 20B des Gefäßes 20 mittels des Heizsystems 20H erhitzt.

Vorzugsweise ist die Temperatur des Bodens 20B zu Beginn und/oder während des Heizvorgangs (deutlich) höher als die Zieltemperatur Tz, insbesondere um mehr als 50 °C oder 100 °C.

Durch die Wärmeübertragung, insbesondere Wärmeleitung, vom Heizsystem 20H bzw. Boden 20B auf das Lebensmittel im Gefäß 20 erhöht sich die Temperatur des Lebensmittels.

Aufgrund des bodenseitigen Wärmeeintrags erhöht sich die Temperatur des Lebensmittels im unteren Bereich des Gefäßes 20 bzw. in unmittelbarer Nähe zum Boden 20B schneller als die Temperatur des Lebensmittels im oberen Bereich des Gefäßes 20. Dies kann insbesondere bei einer Küchenmaschine 1 mit einer hohen Heizleistung, beispielsweise von zumindest im Wesentlichen 1000 W, dazu führen, dass sich beim Erhitzen ein (ausgeprägtes) Temperaturgefälle über die Höhe H des Gefäßes 20 einstellt und die Temperatur des Lebensmittels zu Beginn des Heizvorgangs im unteren Bereich des Gefäßes 20 bzw. in unmittelbarer Nähe zum Boden 20B (deutlich) schneller die Zieltemperatur Tz erreicht als die Temperatur des Lebensmittels im oberen Bereich des Gefäßes 20.

Die durchgezogene Linie in Fig. 2 zeigt den Temperaturverlauf unmittelbar nach Einschalten des Heizsystems 20H bzw. zum ersten Zeitpunkt t1, beispielsweise von weniger als 5 Sekunden oder 20 Sekunden nach Einschalten des Heizsystems 20H.

In unmittelbarer Nähe zum Boden 20B bzw. im unteren Bereich des Gefäßes 20 ist das Lebensmittel zum ersten Zeitpunkt t1 bereits auf die Siede- bzw. Zieltemperatur Tz erhitzt.

Im oberen Bereich des Gefäßes 20 ist die Temperatur des Lebensmittels zum ersten Zeitpunkt t1 kleiner als die Siede- bzw. Zieltemperatur Tz, beispielsweise um mehr als 30 °C oder 50 °C. Insbesondere kann die Temperatur des Lebensmittels im oberen Bereich des Gefäßes 20 zum ersten Zeitpunkt t1 (noch) zumindest im Wesentlichen der Anfangstemperatur Tu entsprechen.

Die strichpunktierte Linie zeigt den Temperaturverlauf des Lebensmittels zu einem - im Vergleich zum ersten Zeitpunkt t1 späteren - zweiten Zeitpunkt t2, beispielsweise von mehr als 20 Sekunden oder 30 Sekunden und/oder weniger als 240 Sekunden oder 120 Sekunden nach Einschalten des Heizsystem 20H.

Im Vergleich zum ersten Zeitpunkt t1 ist das Temperaturprofil über die Höhe H des Gefäßes 20 zum zweiten Zeitpunkt t2 vergleichmäßigt bzw. das Temperaturgefälle über die Höhe H des Gefäßes 20 reduziert. Insbesondere hat sich die Temperatur des Lebensmittels zum zweiten Zeitpunkt t2 im oberen Bereich des Gefäßes 20 erhöht, beispielsweise um mehr als 20 °C oder 40 °C.

Die gestrichelte Linie ist der Temperaturverlauf des Lebensmittels zu einem - im Vergleich zum ersten Zeitpunkt t1 oder zweiten Zeitpunkt t2 späteren - dritten Zeitpunkt t3, beispielsweise von mehr als 2 Minuten oder 5 Minuten nach Einschalten des Heizsystems 20H.

Zu dem dritten Zeitpunkt t3 ist das Lebensmittel vollständig bzw. über die gesamte Höhe H des Gefäßes 20 bzw. auch im oberen Bereich des Gefäßes 20 auf die Zieltemperatur Tz erhitzt.

Insbesondere ist zum dritten Zeitpunkt t3 der (rezeptgemäße/vorgesehene) Heizzustand des Lebensmittels, insbesondere erstmalig, erreicht.

Bei der dargestellten Verfahrenvariante ist zum dritten Zeitpunkt t3 der Siedezustand bzw. -punkt als Heizzustand bzw. die Siedetemperatur als Zieltemperatur Tz des Lebensmittels, insbesondere erstmalig, erreicht.

Wie eingangs bereits erläutert, entstehen durch das Erhitzen des Lebensmittels (mechanische) Schwingungen. Insbesondere wird durch das Erhitzen des Lebensmittels ein insbesondere charakteristisches bzw. zubereitungstypisches (Zubereitungs-)Geräusch erzeugt.

In Abhängigkeit von dem Zeitpunkt, der Zubereitungsart, der Heizleistung des Heizsystems 20H, dem zuzubereitenden Lebensmittel und/oder der zuzubereitenden Menge des Lebensmittels entstehen unterschiedliche Schwingungen bzw. Geräusche, die automatisch bzw. messtechnisch erfasst werden und/oder dazu verwendet werden können, den Heizzustand des Lebensmittels zu identifizieren/bestimmen und/oder zu überwachen.

Bei der dargestellten Verfahrensvariante wird mittels der durch das Erhitzen des Lebensmittels entstehenden Schwingungen bzw. Schwingungsänderungen der Siedepunkt bzw. Siedezustand als Heizzustand des Lebensmittels - automatisch bzw. mittels der Messeinrichtung 10M und/oder der Datenverarbeitungseinrichtung 10R - identifiziert und/oder überwacht.

Insbesondere wird mittels der durch das Erhitzen des Lebensmittels entstehenden Schwingungen bzw. Schwingungsänderungen der dritte Zeitpunkt t3 bestimmt, vorzugsweise um anschließend das Lebensmittel für die Zubereitungszeit Δtz zuzubereiten, insbesondere zu kochen.

Während der Zubereitungszeit Δtz wird der zum Zeitpunkt t3 erreichte Heizzustand vorzugsweise aufrechterhalten. Nach der Zubereitungszeit Δtz wird zu einem vierten Zeitpunkt t4 den Heizvorgang vorzugsweise beendet.

Fig. 3 zeigt den zeitlichen Verlauf der durch Erhitzen des Lebensmittels entstehenden Schwingungen bzw. eines durch das Erhitzen des Lebensmittels entstehenden Geräuschs. In Fig. 3 ist als Hüllkurve eine (mittlere) Amplitude A der Schwingungen bzw. des Geräuschs bezogen auf eine Referenzamplitude A_{ref} über die Zeit t aufgetragen, wobei in dem dargestellten Diagramm die vier Zeitpunkte t1 bis t4 gekennzeichnet sind.

Fig. 4 zeigt die (mittlere) Amplitude A der Schwingungen bzw. des Geräuschs bezogen auf die Referenzamplitude A_{ref} in Abhängigkeit von der Frequenz f, wobei in dem dargestellten Diagramm drei Schwingungszustände bzw. Schwingungen S1 bis S3 zu den Zeitpunkten t1 bis t3 dargestellt sind.

Die ersten Schwingungen S1 sind die durch das Erhitzen des Lebensmittels zum ersten Zeitpunkt t1 erzeugten Schwingungen. Die zweiten Schwingungen S2 sind die durch das Erhitzen des Lebensmittels zum zweiten Zeitpunkt t2 erzeugten Schwingungen. Die dritten Schwingungen S3 sind die durch das Erhitzen des Lebensmittels zum dritten Zeitpunkt t3 erzeugten Schwingungen.

Beim Darstellungsbeispiel entstehen unmittelbar nach Einschalten des Heizsystems 20H bzw. zum ersten Zeitpunkt t1 bzw. bei Erreichen der Siede- bzw. Zieltemperatur Tz im unteren Bereich des Gefäßes 20 insbesondere schlagartig erste/kleinere Wasserdampfbläschen am Boden 20B des Gefäßes 20. Die Verdrängung des Wassers durch die Wasserdampfbläschen erzeugt Schwingungen, insbesondere in Form von Druckwellen, die sich im Lebensmittel und anschließend im Gefäß 20 bzw. in der Küchenmaschine 1 ausbreiten.

Die am Boden des Gefäßes 20 entstandenen Wasserdampfbläschen steigen anschließend nach oben bzw. zur Oberfläche.

Da zum ersten Zeitpunkt t1 das Lebensmittel noch nicht gleichmäßig erhitzt ist bzw. die Temperatur des Lebensmittels im oberen Bereich des Gefäßes 20 kleiner als die Siede- bzw. Zieltemperatur Tz ist, kühlen die Wasserdampfbläschen beim Aufstieg ab und kondensieren schließlich wieder zu Wasser.

Auf diese Weise entstehen (zusätzliche/weitere) Schwingungen, insbesondere in Form von Druckwellen, die sich im Lebensmittel und anschließend im Gefäß 20 bzw. der Küchenmaschine 1 ausbreiten.

Durch das Verdampfen des Wassers bzw. das Entstehen von Wasserdampfbläschen einerseits und das Kondensieren der Wasserdampfbläschen andererseits werden die (ersten) Schwingungen S1 bzw. ein (erstes) Geräusch erzeugt, wie in Fig. 4 dargestellt.

Die Schwingungen S1 bzw. das Geräusch kann ein (Haupt-)Frequenzspektrum mit Frequenzen von 0 kHz bis 20 kHz aufweisen.

Die (mittlere) Amplitude A der Schwingungen und/oder die Lautstärke bzw. Intensität des Geräuschs wird während des Heizvorgangs bzw. beim Erhitzen des Lebensmittels bzw. mit zunehmender Anzahl entstehender und kondensierender Wasserdampfbläschen verstärkt/erhöht. Beim Darstellungsbeispiel ist dies in Fig. 3 durch die Steigung der Hüllkurve zu erkennen.

Durch weiteres Erhitzen des Lebensmittels bzw. zu dem zweiten/späteren Zeitpunkt t2 werden die - im Vergleich zu den ersten Schwingungen S1 ausgeprägteren - (zweiten) Schwingungen S2 erzeugt.

Vorzugsweise ist die (mittlere) Amplitude A und/oder Lautstärke der Schwingungen S2 zum zweiten Zeitpunkt t2 größer als die (mittlere) Amplitude A und/oder Lautstärke der Schwingungen S1 zum ersten Zeitpunkt t1. Insbesondere können die Schwingungen S2 zum zweiten Zeitpunkt t2 als Rauschen hörbar bzw. akustisch wahrnehmbar sein.

Vorzugsweise ist die (mittlere) Amplitude A und/oder Lautstärke der Schwingungen S2 zum zweiten Zeitpunkt t2 - insbesondere über das gesamte Frequenzspektrum und/oder in einem Frequenzbereich von 0 kHz bis 20 kHz - größer als die (mittlere) Amplitude A und/oder Lautstärke der Schwingungen S1 zum ersten Zeitpunkt t1.

Vorzugsweise weisen die Schwingungen S2 zum zweiten Zeitpunkt t2 in einem tieferen Frequenzbereich, insbesondere mit Frequenzen von weniger als 2 kHz oder 1 kHz, eine höhere (mittlere) Amplitude A auf als in einem höheren Frequenzbereich, insbesondere mit Frequenzen von mehr als 2 kHz, 5 kHz oder 10 kHz.

Besonders bevorzugt weisen die Schwingungen S2 zum zweiten Zeitpunkt t2 in einem tieferen Frequenzbereich, insbesondere mit Frequenzen von weniger als 2 kHz, 1 kHz oder 500 Hz, die höchste (mittlere) Amplitude A und in einem höheren Frequenzbereich, insbesondere mit Frequenzen von mehr als 2 kHz, 5 kHz oder 10 kHz, die niedrigste (mittlere) Amplitude A auf.

Während des Heizvorgangs bzw. des Erhitzens des Lebensmittels kann sich die (mittlere) Amplitude A und/oder Lautstärke der Schwingungen bzw. des Geräuschs in einem Frequenzbereich überproportional bzw. stärker als in einem anderen Frequenzbereich erhöhen.

Bei der dargestellten Verfahrensvariante bzw. beim Erhitzen von Wasser bis zum Siedepunkt erhöht sich die (mittlere) Amplitude A und/oder Lautstärke der Schwingungen bzw. des Geräuschs während des Heizvorgangs bzw. des Erhitzens des Lebensmittels in einem tieferen Frequenzbereich, insbesondere mit Frequenzen von weniger als 3 kHz, 1 kHz oder 500 Hz, stärker als in einem höheren Frequenzbereich, insbesondere mit Frequenzen von mehr als 3 kHz oder 5 kHz.

Besonders bevorzugt ist die (mittlere) Amplitude A und/oder Lautstärke der Schwingungen S2 zum zweiten Zeitpunkt t2 in einem tieferen Frequenzbereich, insbesondere mit Frequenzen bis zu 3 kHz, 1 kHz oder 500 Hz, im Vergleich zum ersten Zeitpunkt t1 stärker erhöht als in einem höheren Frequenzbereich, insbesondere mit Frequenzen von mehr als 3 kHz oder 5 kHz, wie insbesondere Fig. 4 veranschaulicht.

Wie bereits erläutert, ist im dritten Zeitpunkt t3 die Siede- bzw. Zieltemperatur Tz und/oder der (rezeptgemäße/vorgesehene) Heizzustand des Lebensmittels erreicht. Insbesondere ist zu dem dritten Zeitpunkt t3 der Siedepunkt des Lebensmittels erreicht und/oder beträgt die (mittlere) Temperatur des Lebensmittels zumindest im Wesentlichen 100 °C.

Zu dem dritten Zeitpunkt t3 entstehen größere Wasserdampfbläschen als zu dem ersten Zeitpunkt t1 bzw. zweiten Zeitpunkt t2, wobei ein Großteil der Wasserdampfbläschen die Wasseroberfläche erreicht und dort an der Wasseroberfläche platzt.

Auf diese Weise werden zum dritten Zeitpunkt t3 die (dritten) Schwingungen S3, insbesondere in Form von Druckwellen, erzeugt, die sich im Lebensmittel und anschließend im Gefäß 20 bzw. der Küchenmaschine 1 ausbreiten.

Die Schwingungen S3 zum dritten Zeitpunkt t3 weisen im Vergleich zu den Schwingungen S1 bzw. S2 zum ersten bzw. zweiten Zeitpunkt t1 bzw. t2 eine höhere bzw. ausgeprägtere (mittlere) Amplitude A und/oder Lautstärke vorzugsweise in einem ersten/-tieferen Frequenzbereich, insbesondere mit Frequenzen von weniger als 1 kHz oder 500 Hz, auf.

In einem zweiten/mittleren/höheren Frequenzbereich, insbesondere mit Frequenzen von mehr als 1 kHz oder 2 kHz und/oder weniger als 9 kHz oder 7 kHz, ist die (mittlere) Amplitude A und/oder Lautstärke der Schwingungen S3 bzw. des Geräuschs zum dritten Zeitpunkt t3 kleiner als die (mittlere) Amplitude A und/oder Lautstärke der Schwingungen S2 bzw. des Geräuschs zum zweiten Zeitpunkt t2.

Zudem kann die (mittlere) Amplitude A und/oder Lautstärke der Schwingungen S3 bzw. des Geräuschs zum dritten Zeitpunkt t3 in einem dritten/hohen Frequenzbereich, insbesondere mit Frequenzen von mehr als 14 kHz, besonders bevorzugt im Bereich von 15 kHz, höher bzw. ausgeprägter sein als die (mittlere) Amplitude A und/oder Lautstärke der Schwingungen bzw. des Geräuschs zum zweiten Zeitpunkt t2.

Mit anderen Worten wird die (mittlere) Amplitude A und/oder Lautstärke der Schwingungen S3 bzw. des Geräuschs zum dritten Zeitpunkt t3 bzw. bei Erreichen des Heizzustands bzw. des Siedepunkts - insbesondere im Vergleich zu den Schwingungen S2 bzw. des Geräuschs zum zweiten Zeitpunkt t2 - in einem ersten/tieferen Frequenzbereich, insbesondere mit Frequenzen von weniger als 1 kHz oder 500 Hz, und/oder in einem dritten/hohen Frequenzbereich, insbesondere mit Frequenzen von mehr als 14 kHz, besonders bevorzugt im Bereich von 15 kHz, erhöht und in einem zweiten/mittleren/höheren Frequenzbereich, insbesondere mit Frequenzen von mehr als 1 kHz oder 2 kHz und/oder weniger als 9 kHz oder 7 kHz, verringert.

Die genannten Frequenzen bzw. Frequenzbereiche können lebensmittelspezifisch, mengenspezifisch, zubereitungsspezifisch und/oder rezeptspezifisch sein. Beispielsweise können sich die Schwingungen in Abhängigkeit vom erhitzten Lebensmittel und/oder der Lebensmittelmenge unterschiedlich ändern. Insbesondere kann eine unterschiedliche Füllhöhe H die Resonanzen des Gefäßes 20 beeinflussen und zu anderen (charakteristischen) Schwingungsänderungen bzw. Frequenzbereichen führen.

Vorzugsweise ist die über alle Frequenzen kumulierte (mittlere) Amplitude A beim dritten Zeitpunkt t3 höher als beim zweiten Zeitpunkt t2, wie insbesondere in Fig. 3 dargestellt.

Die Schwingungen S3 zum dritten Zeitpunkt t3 bzw. bei Erreichen des Siedepunkts sind insbesondere als Blubbern bzw. Brodeln und/oder Vibrieren akustisch und/oder haptisch wahrnehmbar.

Wenn der dritte Zeitpunkt t3 bzw. die Siede- bzw. Zieltemperatur Tz bzw. der Heizzustand erreicht ist, kann die Zubereitung des Lebensmittels für die Zubereitungszeit Δtz erfolgen, vorzugsweise bei konstanter Zieltemperatur Tz. Es sind jedoch auch Verfahrenvarianten möglich, bei den die Zieltemperatur Tz während des Heizvorganges und/oder nach Erreichen der Zieltemperatur Tz angepasst wird.

Nach der Zubereitung des Lebensmittels bzw. zu einem vierten Zeitpunkt t4 wird das Heizsystem 20H vorzugsweise automatisch ausgeschaltet bzw. der Heizvorgang beendet. Wie in Fig. 3 dargestellt, nimmt nach Ausschalten des Heizsystems 20H bzw. nach Beendigung des Heizvorgangs die (mittlere) Amplitude A und/oder Lautstärke der Schwingungen bzw. des Geräuschs (wieder) ab.

Um den Heizzustand, insbesondere den Siedepunkt bzw. -zustand, des Lebensmittels zu identifizieren und/oder zu überwachen, werden die Schwingungen bzw. Schwingungsänderungen - insbesondere kontinuierlich oder in Intervallen - zumindest nach Einschalten des Heizsystems 20H bzw. nach Beginn des Heizvorgangs bzw. während des Erhitzens des Lebensmittels - gemessen, besonders bevorzugt automatisch bzw. mittels der Messeinrichtung 10M, insbesondere des Drucksensors der Messeinrichtung 10M, beispielsweise mit einer Abtastfrequenz von mindestens 10 kHz oder 20 kHz, vorzugsweise von mindestens 50 kHz oder 100 kHz.

Vorzugsweise wird mittels der Messeinrichtung 10M bzw. des Drucksensors nach Einschalten des Heizsystems 20H bzw. nach Beginn des Heizvorgangs bzw. während des Erhitzens des Lebensmittels - insbesondere kontinuierlich oder in Intervallen - mindestens ein Messwert gemessen/aufgenommen.

Der Messwert kann ein für die Schwingungen charakteristischer Wert, ein Amplitudenwert, insbesondere eine mittlere Amplitude A, für eine Frequenz bzw. einen Frequenzbereich und/oder für eine Zeit bzw. einen Zeitpunkt sein.

Die Schwingungen bzw. Schwingungsänderungen bzw. der Messwert, insbesondere die (mittlere) Amplitude A, werden bzw. wird vorzugsweise automatisch in der Küchenmaschine 1, insbesondere der Datenverarbeitungseinrichtung 10R, und/oder in einem externen Gerät, wie einem Server und/oder einem Mobilgerät, gespeichert, verarbeitet und/oder ausgewertet bzw. analysiert.

Systemische bzw. systeminhärente (periodische) Schwingungen, die beispielsweise durch den Rührer 20R bzw. eine Unwucht des Rührers 20R verursacht werden können, werden vorzugsweise mittels der Datenverarbeitungseinrichtung 10R (signaltechnisch) herausgefiltert bzw. für die weitere Analyse nicht beachtet.

Vorzugsweise werden mehrere Messwerte, insbesondere (mittlere) Amplituden A, für unterschiedliche Frequenzen und/oder Frequenzbereiche mittels der Messeinrichtung 10M gemessen/aufgenommen und/oder insbesondere mittels der Datenverarbeitungseinrichtung 10R gespeichert, verarbeitet und/oder ausgewertet bzw. analysiert.

Vorzugsweise wird ein erster Messwert bzw. eine mittlere Amplitude A1 für einen ersten/tiefen Frequenzbereich F1, beispielsweise mit Frequenzen von mehr als 0 Hz und/oder weniger als 1000 Hz oder 500 Hz, und/oder ein zweiter Messwert bzw. eine mittlere Amplitude A2 für einen zweiten/mittleren/hohen Frequenzbereich F2, insbesondere mit Frequenzen von mehr als 1000 Hz, 2000 Hz oder 3000 Hz und/oder weniger als 9000 Hz oder 7000 Hz, gemessen bzw. gebildet.

Besonders bevorzugt sind die Frequenzen des ersten/tiefen Frequenzbereichs F1 tiefer als die Frequenzen des zweiten/mittlere/hohen Frequenzbereichs F2.

Vorzugsweise wird der (jeweilige) Messwert, insbesondere die (jeweilige) mittlere Amplitude A, anschließend mit einem (jeweiligen), vozugsweise vordefinierten, Grenzwert - insbesondere mittels der Datenverarbeitungseinrichtung 10R - verglichen, um den Heizzustand des Lebensmittels zu identifizieren. Der Grenzwert wird folglich vorzugsweise als Führungsgröße eingesetzt.

Der Grenzwert ist vorzugsweise in der Datenverarbeitungseinrichtung 10R, besonders bevorzugt einem Speicher der Datenverarbeitungseinrichtung 10R, und/oder in einem externen Gerät, wie einem Mobilgerät und/oder einem Server, elektronisch hinterlegt bzw. gespeichert.

Der Grenzwert kann frequenzspezifisch, lebensmittelspezifisch, rezeptspezifisch, zubereitungsspezifisch und/oder mengenspezifisch sein bzw. angepasst werden.

Insbesondere können unterschiedlichen Frequenzen bzw. Frequenzbereichen, Lebensmitteln und/oder Lebensmittelmengen, Rezepten und/oder Zubereitungsarten unterschiedliche Grenzwerte zugeordnet sein, beispielsweise in einer (digitalen) Datenbank, wie einer Rezeptdatenbank und/oder Lebensmitteldatenbank, vorzugweise wobei die Küchenmaschine 1, insbesondere die Datenverarbeitungseinrichtung 10R und/oder die Kommunikationseinrichtung 10K, (datentechnisch) mit der Datenbank verbunden oder verbindbar ist, um den Grenzwert bzw. die Grenzwerte abzurufen, zu speichern und/oder für den Vergleich mit dem Messwert bzw. den Messwerten zu verwenden.

Die Identifikation des Heizzustands erfolgt vorzugsweise anhand eines oder mehrerer vordefinierter Kriterien, bei denen der (jeweilige) Messwert und der (jeweilige) Grenzwert - insbesondere automatisch, mathematisch, messtechnisch und/oder unmittelbar oder mittelbar - miteinander verglichen werden.

Insbesondere liegt der (gewünschte) Heizzustand vor, wenn ein oder mehrere Kriterien - besonders bevorzugt zeitgleich und/oder über einen vordefinierten Zeitraum - erfüllt sind.

Vorzugsweise wird bei einem ersten Kriterium der erste Messwert, insbesondere die (erste) mittlere Amplitude A1, des ersten/tiefen Frequenzbereich F1 mit einem ersten Grenzwert G1 verglichen.

Liegt der erste Messwert bzw. die erste mittlere Amplitude A1 über dem Grenzwert G1, ist das erste Kriterium erfüllt bzw. ist der Heizzustand, beispielsweise der Siedezustand bzw. -punkt, des Lebensmittels erreicht.

Vorzugsweise wird bei einem weiteren/zweiten Kriterium der zweite Messwert, insbesondere die (zweite) mittlere Amplitude A2, des zweiten/mittleren/hohen Frequenzbereichs F2 mit einem zweiten Grenzwert G2 verglichen, um den Heizzustand zu identifizieren.

Liegt der zweite Messwert bzw. die zweite mittlere Amplitude A2 unterhalb des zweiten Grenzwerts G2, ist das zweite Kriterium erfüllt bzw. ist der Heizzustand, beispielsweise der Siedezustand bzw. -punkt, des Lebensmittels erreicht.

Bei einem weiteren/dritten Kriterium werden vorzugsweise die Schwingungsänderungen bzw. Geräuschänderungen während des Heizvorgangs gemessen, um den Heizzustand des Lebensmittels zu identifizieren bzw. zu überwachen.

Werden die Schwingungen bzw. wird der Messwert, insbesondere die mittlere Amplitude A2, des zweiten/mittleren/hohen Frequenzbereichs F2 zunächst intensiver bzw. größer und anschließend geringer, ist das dritte Kriterium erfüllt bzw. ist der Heizzustand des Lebensmittels erreicht.

Vorzugsweise liegt der Heizzustand des Lebensmittels vor, wenn ein Kriterium oder mehrere Kriterien, insbesondere über einen vordefinierten Zeitraum, beispielsweise von mehr als einer Sekunde oder fünf Sekunden, erfüllt ist bzw. sind.

Vorzugsweise werden in Abhängigkeit von der Frequenz bzw. dem Frequenzbereich, dem zuzubereitenden Lebensmittel, der zuzubereitenden Menge des Lebensmittels, der Zubereitungsart und/oder vom ausgewählten Rezept unterschiedliche Grenzwerte bzw. Kriterien zur Identifizierung des Heizzustands angewandt.

Bei anderen als dem im Darstellungsbeispiel gezeigten Lebensmitteln könnte beispielsweise auch eine Erhöhung der Amplitude A in hohen Frequenzbereichen stattfinden. Dies ist vorzugsweise durch Hinterlegung entsprechender (lebensmittelspezifischer) Grenzwerte berücksichtigt.

Die vorgenannten Kriterien können grundsätzlich unabhängig voneinander oder in beliebiger Kombination verwendet werden, um den Heizzustand des Lebensmittels zu identifizieren und/oder zu überwachen.

Wie eingangs bereits erläutert, wird der Betrieb der Küchenmaschine 1, insbesondere die Heizleistung der Küchenmaschine 1 bzw. des Heizsystems 20H, in Abhängigkeit vom identifizierten Heizzustand und/oder den Schwingungen bzw. Schwingungsänderungen automatisch angepasst bzw. geregelt, vorzugsweise mittels der Steuereinrichtung 10S.

Wenn der Heizzustand, beispielsweise der Siedepunkt, identifiziert bzw. erreicht ist, kann beispielsweise ein Rührvorgang mittels des Rührers 20R und/oder ein Heizvorgang mittels des Heizsystems 20H durchgeführt, gestartet, beendet und/oder angepasst werden, vorzugsweise mittels der Steuereinrichtung 10S.

Beispielsweise kann bei Erreichen bzw. Identifizieren des Heizzustands, insbesondere des Siedezustands, die Heizleistung des Heizsystems 20H reduziert werden, insbesondere derart, dass der Heizzustand bzw. der Siedepunkt beibehalten wird. Auf diese Weise wird der Energieverbrauch der Küchenmaschine 1 reduziert.

Vorzugsweise wird das Lebensmittel bei Erreichen des Heizzustands für die Zubereitungszeit Δtz zubereitet.

Nach der Zubereitungszeit Δtz bzw. zum vierten Zeitpunkt t4 wird das Heizsystem 20H vorzugsweise automatisch ausgeschaltet bzw. der Heizvorgang vorzugsweise automatisch beendet, vorzugsweise mittels der Steuereinrichtung 10S.

Das vorschlagsgemäße Verfahren ermöglicht es, ausschließlich mittels der durch Erhitzen des Lebensmittels entstehenden Schwingungen bzw. Schwingungsänderungen (unterschiedliche) Heizzustände des Lebensmittels zu identifizieren und/oder zu überwachen, insbesondere unter Verwendung der bereits in der Küchenmaschine 1 vorhandenen Messeinrichtung 10M bzw. ohne zusätzliche Sensorik. Auf diese Weise wird eine besonders einfache Funktionserweiterung und/oder Automatisierung der Zubereitung eines Lebensmittels der Küchenmaschine 1 ermöglicht.

Einzelne Aspekte, Merkmale und Verfahrensschritte bzw. -varianten der vorliegenden Erfindung können unabhängig, aber auch in beliebiger Kombination und/oder Reihenfolge realisiert werden.

### Bezugszeichenliste:

| | | | |
|---|---|---|---|
| 1 | Küchenmaschine | A | Amplitude |
| | | A1 | erster Amplitudenwert |
| 10 | Basisstation | | |
| 10A | Aufnahme | A2 | zweiter Amplitudenwert |
| 10B | Eingabeeinrichtung | A_{ref} | Referenzamplitude |
| 10C | Netzkabel | f | Frequenz |
| 10D | Anzeigeeinrichtung | F1 | erster Frequenzbereich |
| 10E | Elektromotor | F2 | zweiter Frequenzbereich |
| 10K | Kommunikationseinrichtung | G1 | erster Grenzwert |
| 10M | Messeinrichtung | G2 | zweiter Grenzwert |
| 10N | Netzteil | | |
| 10R | Datenverarbeitungseinrichtung | H | (Füll-)Höhe |
| 10S | Steuereinrichtung | S1 | erste Schwingungen |
| 10U | Benutzerschnittstelle | S2 | zweite Schwingungen |
| 10W | Welle | S3 | dritte Schwingungen |
| 10X | erster elektrischer Anschluss | | |
| 10Y | zweiter elektrischer Anschluss | T | Temperatur |
| | | Tu | Anfangstemperatur |
| 20 | Gefäß | Tz | Zieltemperatur |
| 20B | Boden | | |
| 20D | Deckel | t | Zeit |
| 20G | Griff | t1 | erster Zeitpunkt |
| 20H | Heizsystem | t2 | zweiter Zeitpunkt |
| 20R | Rührer | t3 | dritter Zeitpunkt |
| 20W | Wandung | t4 | vierter Zeitpunkt |
| 20X | erster elektrischer Anschluss | Δtz | Zubereitungszeit |
| 20Y | zweiter elektrischer Anschluss | X | Mittelachse |
| | | ZR | Zubereitungsraum |

## Patentansprüche

1. Verfahren zum Betreiben einer Küchenmaschine (1) zur Zubereitung eines Lebensmittels,
wobei mittels der Küchenmaschine (1) das Lebensmittel erhitzt wird,
**dadurch gekennzeichnet,**
**dass** durch das Erhitzen des Lebensmittels entstehende Schwingungen (S1-S3) bzw. Schwingungsänderungen gemessen werden, um einen Heizzustand des Lebensmittels zu identifizieren und/oder zu überwachen.

2. Verfahren nach Anspruch 1, **dadurch gekennzeichnet, dass** unterschiedliche Heizzustände des Lebensmittels identifiziert und/oder überwacht werden und/oder dass der Heizzustand ein Sieden, Simmern, Braten, Grillen, Schmoren, Dünsten und/oder Frittieren des Lebensmittels ist.

3. Verfahren nach Anspruch 1 oder 2, **dadurch gekennzeichnet, dass** die Schwingungen (S1-S3) bzw. Schwingungsänderungen eines durch das Erhitzen des Lebensmittels entstehendes Geräuschs gemessen werden, um den Heizzustand zu identifizieren und/oder zu überwachen.

4. Verfahren nach einem der voranstehenden Ansprüche, **dadurch gekennzeichnet, dass** die Schwingungen (S1-S3) bzw. Schwingungsänderungen eines Siedegeräuschs gemessen werden, um einen Siedezustand und/oder einen Siedepunkt des Lebensmittels zu identifizieren und/oder zu überwachen.

5. Verfahren nach Anspruch 4, **dadurch gekennzeichnet, dass** die Küchenmaschine (1) mittels der gemessen Schwingungen (S1-S3) bzw. Schwingungsänderungen derart geregelt wird, dass das Lebensmittel wahlweise oberhalb oder unterhalb des Siedepunkts des Lebensmittels zubereitet wird.

6. Verfahren nach einem der voranstehenden Ansprüche, **dadurch gekennzeichnet, dass** die Schwingungen (S1-S3) bzw. Schwingungsänderungen mittels einer Messeinrichtung (10M), insbesondere einem Drucksensor, der Küchenmaschine (1) gemessen werden.

7. Verfahren nach Anspruch 6, **dadurch gekennzeichnet, dass** das Gewicht des Lebensmittels mittels der Messeinrichtung (10M), insbesondere des Drucksensors, bestimmt wird und/oder die Messeinrichtung (10M) als Waage ausgebildet ist.

8. Verfahren nach einem der voranstehenden Ansprüche, **dadurch gekennzeichnet, dass** ein Messwert der Schwingungen (S1-S3) bzw. Schwingungsänderungen, insbesondere ein Amplitudenwert (A), besonders bevorzugt eine mittlere Amplitude (A), eines Frequenzbereichs der Schwingungen mit einem Grenzwert verglichen wird, um den Heizzustand zu identifizieren und/oder zu überwachen.

9. Verfahren nach Anspruch 8, **dadurch gekennzeichnet, dass** der Grenzwert frequenzspezifisch, lebensmittelspezifisch, mengenspezifisch, zubereitungsspezifisch und/oder rezeptspezifisch ist bzw. angepasst wird.

10. Verfahren nach einem der voranstehenden Ansprüche, **dadurch gekennzeichnet, dass** ein Amplitudenwert, insbesondere eine mittlere Amplitude (A1), eines ersten Frequenzbereichs (F1) der Schwingungen (S1-S3) mit einem ersten Grenzwert (G1) und ein Amplitudenwert, insbesondere eine mittlere Amplitude (A2), eines zweiten Frequenzbereichs (F2) mit einem zweiten Grenzwert (G2) verglichen wird, wobei die Frequenzen des ersten Frequenzbereichs (F1) tiefer als die Frequenzen des zweiten Frequenzbereichs (F2) sind.

11. Verfahren nach Anspruch 10, **dadurch gekennzeichnet, dass** überprüft wird, ob der Amplitudenwert, insbesondere die mittlere Amplitude (A1), des ersten Frequenzbereichs (F1) der Schwingungen (S1-S3) größer als der erste Grenzwert (G1) und/oder der Amplitudenwert, insbesondere die mittlere Amplitude (A2), des zweiten Frequenzbereichs (F2) kleiner als der zweite Grenzwert (G2) ist.

12. Verfahren nach einem der voranstehenden Ansprüche, **dadurch gekennzeichnet, dass** in Abhängigkeit vom identifizierten Heizzustand und/oder der Schwingungen (S1-S3) bzw. Schwingungsänderungen der Betrieb der Küchenmaschine (1), insbesondere eine Heizleistung der Küchenmaschine (1), automatisch angepasst und/oder geregelt wird.

13. Verfahren nach einem der voranstehenden Ansprüche, **dadurch gekennzeichnet, dass** bei Identifizierung des Heizzustands automatisch ein Rührvorgang und/oder ein Heizvorgang durchgeführt, gestartet, beendet und/oder angepasst wird.

14. Verwendung einer Waage einer Küchenmaschine (1) zum Identifizieren und/oder Überwachen eines Heizzustands eines Lebensmittels,
wobei mittels der Küchenmaschine (1) das Lebensmittel erhitzt wird, und
wobei mittels der Waage die durch das Erhitzen des Lebensmittels in der Küchenmaschine (1) entstehenden Schwingungen (S1-S3) bzw. Schwingungsänderungen gemessen werden, um den Heizzustand des Lebensmittels zu identifizieren und/oder zu überwachen.

15. Küchenmaschine (1) zur Zubereitung eines Lebensmittels,
wobei die Küchenmaschine (1) ein elektrisches Heizsystem (20H) zum Erhitzen des Lebensmittels und eine Waage zum Bestimmen des Gewichts des Lebensmittels aufweist,
**dadurch gekennzeichnet,**
**dass** die Küchenmaschine (1) zur Durchführung des Verfahrens nach einem der Ansprüche 1 bis 13 oder zur Verwendung gemäß Anspruch 14 ausgebildet ist.
